# EUROPÄISCHE PATENTSCHRIFT

(11) **EP 3 138 382 B1**
(45) Veröffentlichungstag und Bekanntmachung des Hinweises auf die Patenterteilung: **12.06.2019**
(21) Anmeldenummer: 16001921.2
(22) Anmeldetag: 01.09.2016
(51) Int. Cl.: A01D 90/04, B30B 11/00

(54) **LANDWIRTSCHAFTLICHE ERNTEMASCHINE**
AGRICULTURAL HARVESTER
MOISSONNEUSE

(30) Priorität: 04.09.2015 DE 102015011380
(43) Veröffentlichungstag der Anmeldung: 08.03.2017
(73) Patentinhaber: Maschinenfabrik Bernard Krone GmbH & Co. KG, 48480 Spelle (DE)
(72) Erfinder: Kalverkamp, Klemens, 49401 Damme (DE); Kalverkamp, Felix, 49401 Damme (DE)

(56) Entgegenhaltungen:
- AT-B- 318 271
- DE-A1-102012 017 548
- yourCLAAS: "CLAAS CARGOS loading process animation / 2010", youtube, 19. April 2012 (2012-04-19), Seite 3 pp., XP054976945, Gefunden im Internet: URL:https://www.youtube.com/watch?v=pUhZRo M2jCE [gefunden am 2016-11-28]

## Beschreibung

Die Erfindung bezieht sich auf eine landwirtschaftliche Erntemaschine zur Bearbeitung von halmförmigem Erntegut gemäß dem Oberbegriff des Anspruchs 1. Derartige Erntemaschinen sind für sich in vielfältigen Ausführungsformen bekannt und dienen im Wesentlichen der Ernte von Heu, Stroh oder dgl. halmförmigen Erntegütern. Beim Erntevorgang wird das halmförmige Erntegut durch eine Aufnahmeeinrichtung vom Feld- oder Wiesenboden aufgenommen und nachfolgend einer Bearbeitungseinrichtung zugeführt, in der das halmförmige Erntegut beispielsweise geschnitten und/oder zu Pressballen verdichtet wird. Stattdessen ist auch eine Bearbeitung des halmförmigen Erntegutes bekannt, welche auf die Herstellung von Pellets ausgerichtet ist. Bei allen hier aufgezählten Erntemaschinen kann es während der Nutzung dazu kommen, dass mit der Aufnahme des halmförmigen Erntegutes von der Feld- oder Wiesenfläche auch Steine oder dgl. Fremdkörper mit in die Erntemaschine gelangen. Bei der Bearbeitung des mit Steinen versetzten, halmförmigen Erntegutes in den zuvor beschriebenen Bearbeitungseinrichtungen können schwerwiegende Schäden an der Erntemaschine entstehen.

Aus der DE 42 01 545 A1 ist eine landwirtschaftliche Erntemaschine in der Art eines Schneidlade-Erntewagen bekannt geworden, bei dem in einem Bereich zwischen einer Aufnahmestelle für das Erntegut und einer nachgeordneten Fördertrommel eine Steinfalle vorgesehen ist, an der Steine aus dem Erntegut selbsttätig ausgeschieden werden sollen. Bei einem derartigen Fördervorgang sind etwaige Steine von dem halmförmigen Erntegut vollständig umgeben, so dass eine zuverlässige Trennung von Steinen und Erntegut nicht erreichbar ist. Es ist also nicht zuverlässig ausgeschlossen, dass in dem der Bearbeitungseinrichtung zugeführten Erntegut nicht doch noch Steine eingeschlossen sind, die dann in der Bearbeitungseinrichtung schwerwiegende Schäden verursachen können.

Aus der DE 10 2012 017 548 A1 geht eine landwirtschaftliche Erntemaschine zum Pressen von Pellets hervor, bei der das Erntegut über eine Aufnahmevorrichtung aufgenommen wird, um dieses dann über einen Selektierer und eine Einzugsschnecke an eine Pelletiervorrichtung weiter zu fördern. Wie insbesondere der Fig. 11 zu entnehmen ist, befindet sich zwischen der Einzugsschnecke und der Pelletiervorrichtung ein sogenannter Steinbrecher, der aus zwei gegenläufig angetriebenen Walzen gebildet ist und mit dem Erntegut aufgenommene Steine zertrümmert, so dass diese den Pelletierprozess nicht mehr stören. Mithin ist daher überhaupt kein Spalt in der Förderkette erforderlich, um Steine aus dem Erntegutstrom auszusondern. Eine anderslautende Offenbarung ist in der Druckschrift nicht zum Ausdruck gebracht.

Aufgabe der Erfindung ist es daher, eine landwirtschaftliche Erntemaschine zur Bearbeitung von halmförmigem Erntegut vorzuschlagen, bei der eine Zuführung von mit Steinen versetztem Erntegut zu einer Bearbeitungseinrichtung der Erntemaschine zuverlässig vermieden wird.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Nach der Erfindung wird eine landwirtschaftliche Erntemaschine zur Bearbeitung von halmförmigen Erntegut vorgeschlagen, mit einer Aufnahmeeinrichtung zur Aufnahme des halmförmigen Erntegutes und zur Weiterförderung des halmförmigen Erntegutes in Richtung auf eine, in Bezug zu einer Fahrt- und Arbeitsrichtung der Erntemaschine, der Aufnahmeeinrichtung nachgeordneten Bearbeitungseinrichtung, wobei zwischen der Aufnahmeeinrichtung und der Bearbeitungseinrichtung eine Förderstrecke für das halmförmige Erntegut ausgebildet ist, wobei die Förderstrecke zumindest aus einem ortfesten Förderbodenelement und einem angetriebenen, eine schiefe Ebene bildenden, zumindest in etwa flächenförmigen Förderelement gebildet ist, wobei das ortsfeste Förderbodenelement und das angetriebene, eine schiefe Ebene bildende, zumindest in etwa flächenförmige Förderelement durch einen sich über die gesamte Breite der Förderstrecke erstreckenden Spalt voneinander getrennt sind, durch den Steine oder dgl. Fremdkörper im Erntegut aus der Förderstrecke ausgeschieden werden und das ortsfeste Förderbodenelement dazu eingerichtet ist, den Erntegutstrom beim Überqueren des Spaltes in der Förderstrecke derart auszurichten, dass dieser auf das angetriebene, eine schiefe Ebene bildende, zumindest in etwa flächenförmige Förderelement auftrifft, wobei das angetriebene, eine schiefe Ebene bildende und zumindest in etwa flächenförmiges Förderelement ein Bereich einer Zuführeinrichtung ist, der sich zwischen den beiden Umlenkrollen erstreckt und etwa flächenförmig in der Art einer schiefen Ebene in Richtung auf die nachgeordnete Bearbeitungseinrichtung ausgerichtet ist, dessen Ausrichtung so gewählt ist, dass der Anstellwinkel in Bezug zur Vertikalen im Bereich zwischen 30° und 60° liegt.

Das Ausscheiden von Steinen oder dgl. Fremdkörpern aus der Förderstrecke basiert erfindungsgemäß auf der Erkenntnis, dass bei einem, halmförmiges Erntegut und Steine enthaltenden Erntegutstrom, der auf ein angetriebenes, eine schiefe Ebene bildendes und zumindest in etwa flächenförmiges Förderelement auftrifft, eine zuverlässige Trennung dadurch bewirkt wird, dass das halmförmige Erntegut auf dem angetriebenen, eine schiefe Ebene bildenden und zumindest in etwa flächenförmigen Förderelement aufgrund der länglichen und flachen Struktur des Erntegutes schräg nach oben gefördert wird, während die Steine aufgrund der runden und damit rollfähigen Struktur und des großen Gewichts von der schiefen Ebene herunterrollend die Förderstrecke verlassen. Erfindungsgemäß weist die schiefe Ebene des Förderelementes einen Anstellungswinkel zur Vertikalen auf, der in einem Bereich zwischen 30° und 60° liegt. Um nun zuverlässig eine Trennung von halmförmigen Erntegut und den Steinen vollziehen zu können, beinhaltet die Förderstrecke zwischen der Aufnahmeeinrichtung und der Bearbeitungseinrichtung ein der Aufnahmeeinrichtung nachgeordnetes Förderbodenelement, welches ortsfest an einer Rahmenbaugruppe der Erntemaschine angebracht ist. Damit Steine aus dem Erntegutstrom im Bereich der Förderstrecke zwischen der Aufnahmeeinrichtung und der Bearbeitungseinrichtung herausfallen können, weist die Förderstrecke zwischen dem ortsfesten Förderbodenelement und dem angetriebenen, eine schiefe Ebene bildenden und zumindest in etwa flächenförmigen Förderelement einen Spalt auf, der sich über die gesamte Breite der Förderstrecke erstreckt, Die Durchgangsweite des Spaltes zur Passage von Steinen aus dem Erntegutstrom auf der Förderstrecke bis auf die Feld-oder Wiesenfläche kann Werte von bis 200 mm annehmen.

Ein weiteres erfindungsgemäßes Kriterium zur zuverlässigen Trennung von halmförmigen Erntegut und Steinen ist die Ausrichtung des angetriebenen, eine schiefe Ebene bildenden und zumindest in etwa flächenförmigen Förderelementes in Bezug aus das der Aufnahmeeinrichtung nachgeordnete, ortsfeste Förderbodenelement. Hierbei ist es vorteilhaft, wenn das angetriebene, eine schiefe Ebene bildende und zumindest in etwa flächenförmige Förderelement hinsichtlich seiner Anbringungshöhe an der Rahmenbaugruppe der Erntemaschine so ausgerichtet ist, dass der über das ortsfeste Förderbodenelement zugeführte Erntegutstrom zentral auf dem angetriebenen, eine schiefe Ebene bildenden und zumindest in etwa flächenförmigen Förderelement auftrifft. Diese Höhenzuordnung der vorderen und hinteren, den Spalt in der Förderstrecke begrenzenden Baugruppen ermöglicht zudem eine optimale Zuführung des halmförmigen Erntegutes hin zu der Bearbeitungseinrichtung, da bei der Überwindung der oberen Kante des angetriebenen, eine schiefe Ebene bildenden und zumindest in etwa flächenförmigen Förderelementes keine unnötige Hochförderung des Erntegutes erfolgen muss.

Bei der Gestaltung des Spaltes in der Förderstrecke spielt die in Fahrt- und Arbeitsrichtung gerichtete Positionierung des angetriebenen, eine schiefe Ebene bildenden und zumindest in etwa flächenförmigen Förderelementes im Hinblick auf das ortsfeste Förderbodenelement ebenfalls eine wichtige Rolle. So ist es nach der Erfindung vorgesehen, dass die vorderste Kante des angetriebenen, eine schiefe Ebene bildenden und zumindest in etwa flächenförmigen Förderelementes in vertikaler Blickrichtung noch unterhalb der hintersten Kante des ortsfesten Förderbodenelementes gelegen ist. Dadurch werden Erntegutverluste bei der Überquerung des Spaltes in der Förderstrecke vermieden.

Eine vorteilhafte Ausführungsform der Erfindung geht davon aus, dass das angetriebene, eine schiefe Ebene bildende und zumindest in etwa flächenförmige Förderelement Teil einer weiteren Zuführeinrichtung zur Zuführung des halmförmigen Erntegutes zur Bearbeitungseinrichtung bildet. Diese Zuführeinrichtung kann beispielsweise als eine mit einem umlaufend angetriebenen Förderband ausgerüstete Gurtfördereinrichtung ausgeführt sein, Als Bearbeitungseinrichtung kann die Erntemaschine selbstverständlich mit einer Mehrzahl unterschiedlicher Aggregate ausgerüstet sein. Als Beispiele seien hier Förder- und Schneidrotoren für einen landwirtschaftlichen Ladewagen oder Pressorgane für landwirtschaftliche Ballenpressen genannt. Weiterhin kann die Erfindung auch auf eine Maschine zur Herstellung von Pellets angewendet werden, bei der als Bearbeitungseinrichtung zumindest zwei einander zugeordnete Presstrommeln eingesetzt sind, welche eine Pressvorrichtung zur Herstellung von Pellets ausbilden.

In einer weiteren vorteilhaften Ausführungsform kann es aber auch vorgesehen sein, dass das angetriebene, eine schiefe Ebene bildende und zumindest in etwa flächenförmige Förderelement aus einer Anzahl von aneinander gereihten Förderwalzen besteht.

Zur weiteren Verbesserung des Fördervorganges bzw. zur Vergleichmäßigung des Erntegutstromes im Bereich der zur Bearbeitungseinrichtung führenden Förderstrecke, welche insbesondere bei einer Pelletiermaschine von großer Bedeutung ist, kann der Aufnahmeeinrichtung ein Förderrotor nachgeordnet sein. Die diesem Förderrotor zugehörigen Abstreifer können dabei eine Durchgangsweite im Förderkanal für Steine ausbilden, die kleiner ausgebildet ist als die Durchgangsweite des Spaltes in der Förderstrecke. Damit ist eine zusätzliche Sicherheit geschaffen worden, die es verhindert, dass Steine mit einer Korngröße größer als der Durchgangsweite des Spaltes in der Förderstrecke in den Bereich der Bearbeitungseinrichtung gelangen können.

Nachfolgend wird ein vorteilhaftes Ausführungsbeispiel der Erfindung anhand einer Zeichnung beschrieben. In der Zeichnung zeigt:
- Fig. 1:: eine Perspektivansicht einer landwirtschaftlichen Erntemaschine zur Bearbeitung von halmförmigem Erntegut gemäß der Erfindung;
- Fig. 2:: eine Schnittdarstellung der Erntemaschine nach Fig.1, wobei der Schnittverlauf entlang einer in Fahrt- und Arbeltsrichtung gerichteten, vertikalen Längsmittelebene geführt ist;

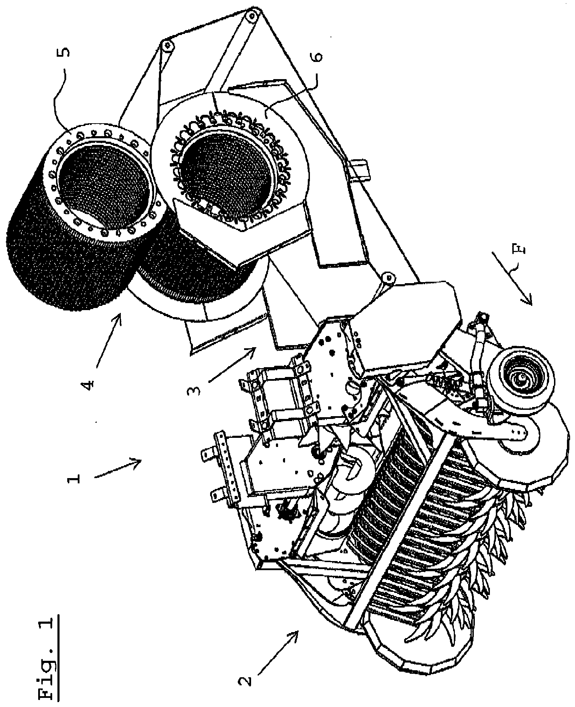

Aus der Fig. 1 geht eine landwirtschaftliche Erntemaschine zur Bearbeitung von halmförmigem Erntegut hervor, bei der aus Gründen einer besseren Übersichtlichkeit lediglich die funktionswesentlichen Baugruppen dargestellt sind. Auf Baugruppen wie Gehäuse, Antriebe, Hauptfahrwerk und Produktbehälter wurde bei der zeichnerischen Darstellung bewusst verzichtet. Wie aus Fig.1 hervorgeht, umfasst die landwirtschaftliche Erntemaschine 1 in ihrem in Bezug zur Fahrt- und Arbeitsrichtung F vorderen Bereich eine Aufnahmeeinrichtung 2 zur Aufnahme von in Schwaden liegendem halmförmigem Erntegut von einer Feld- und Wiesenfläche. Diese Aufnahmeeinrichtung 2 dient dazu das aufgenommene halmförmige Erntegut vom Boden aufzunehmen, daraus einen gleichmäßigen Halmgutstrom zu formen und das Erntegut über eine Förderstrecke 3 einer Bearbeitungseinrichtung 4 zu zuführen. Als Bearbeitungseinrichtung 4 kann bei der Erntemaschine 1 grundsätzlich eine Mehrzahl unterschiedlicher Aggregate zum Einsatz kommen. Beispielsweise sei hier an Förder- und Schneidrotoren für Ladewagen oder an Pressorgane für landwirtschaftliche Ballenpressen gedacht. Die Bearbeitungseinrichtung nach Fig.1 betrifft eine Einrichtung zur Herstellung von Pellets, bei der zumindest zwei einander zugeordnete, rotierend angetriebene Presstrommeln 5,6 zwischen sich eine Pressvorrichtung ausbilden, so dass das halmförmige Erntegut unter dem Einfluss dieser Pressvorrichtung zu Pellets geformt wird.

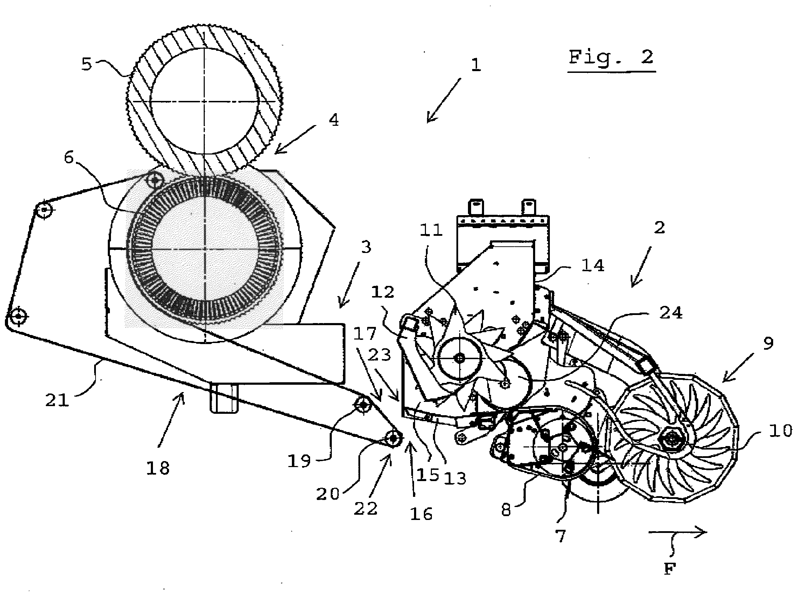

Wie aus Fig. 2 zu erkennen ist, umfasst die Aufnahmeeinrichtung 2 eine mit Federzinken 7 besetzte Pickup-Trommel 8, bei der durch den angetriebenen Umlauf der Federzinken 7 das halmförmiges Erntegut von Feld- oder Wiesenfläche aufgenommen wird. Der Pickup-Trommel 8 vorgeordnet ist eine Haltevorrichtung 9, welche aus einem sternförmig gestalteten Rotor 10 gebildet ist und dafür sorgt, dass ein gleichmäßig geformter Erntegutstrom über die Förderstrecke 3 der Bearbeitungseinrichtung 4 zugeführt wird. Der Pickup-Trommel 8 in Bezug zur Fahrt- und Arbeitsrichtung F nachgeordnet ist ein Förderrotor 11, der in Zusammenwirkung mit einem Abstreifer 12 ebenfalls dafür sorgt, dass ein gleichmäßig geformter Erntegutstrom die Bearbeitungseinrichtung 4 erreicht, Ebenfalls der Pickup-Trommel 8 nachgeordnet und unterhalb von dem Förderrotor 11 befindet sich das ortsfeste Förderbodenelement 13, welches starr an einer Rahmenbaugruppe 14 der Erntemaschine 1 angebracht ist. Das ortsfeste Förderbodenelement 13 bildet zusammen mit dem Förderrotor 11 einen Förderkanal 15 aus, den das halmförmige Emtegut beim Fördervorgang zur Bearbeitungseinrichtung durchläuft.

Im Anschluss an den Förderkanal 15 wird die Förderstrecke 3 durch einen sich über die gesamte Breite der Förderstrecke 3 erstreckenden Spalt 16 unterbrochen. Das sich in einer der Fahrt- und Arbeitsrichtung F entgegengesetzten Richtung anschließende, angetriebene, eine schiefe Ebene bildende und zumindest in etwa flächenförmige Förderelement 17 stellt damit die hintere Begrenzung des Spaltes 17 dar. Als angetriebenes, eine schiefe Ebene bildendes und zumindest in etwa flächenförmiges Förderelement 17 bezeichnet die Erfindung den Bereich einer Zuführeinrichtung 18, der sich zwischen den beiden Umlenkrollen 19,20 erstreckt und etwa flächenförmig in der Art einer schiefen Ebene in Richtung auf die nachgeordnete Bearbeitungseinrichtung 4 ausgerichtet ist. Die Ausrichtung der schiefen Ebene ist so gewählt, dass der Anstellwinkel in Bezug zur Vertikalen im Bereich zwischen 30° und 60° liegt. Die Zuführeinrichtung 18 ist im dargestellten Ausführungsbeispiel der Fig. 2 vorteilhaft als eine mit einem umlaufend angetriebenen Förderband 21 ausgerüstete Gurtfördereinrichtung ausgebildet.

Bei der Ausbildung des Spaltes 16 in der Förderstrecke 3 ist es aufgrund einer vorteilhaften Positionierung des angetriebenen, eine schiefe Ebene bildenden und zumindest in etwa flächenförmigen Förderelementes 17 im Hinblick auf das ortsfeste Förderbodenelement 13 erreicht worden, dass Erntegutverluste bei der Überquerung des Spaltes in der Förderstrecke vermieden werden können, wenn die vorderste Kante 22 des angetriebenen, eine schiefe Ebene bildenden und zumindest in etwa flächenförmigen Förderelementes 17 in vertikaler Blickrichtung noch unterhalb der hintersten Kante 23 des ortsfesten Förderbodenelementes 13 gelegen ist.

Während des Einsatzes der Erntemaschine 1 auf einer Feld- oder Wiesenfläche wird von der als Pickup-Trommel 8 ausgeführten Aufnahmeeinrichtung 2 in Schwaden abgelegtes halmförmiges Emtegut aufgenommen und über der Pickup-Trommel 8 angeordneten Förderschnecken 24 sowie über die Fördertrommel 11 ein gleichmäßig geformter Erntegutstrom gebildet. Dieser gleichmäßig geformte Emtegutstrom überquert geführt von dem ortsfesten Förderbodenelement 13 den Spalt 16 in der Förderstrecke 3 und trifft dabei zentral auf das angetriebene, eine schiefe Ebene bildende und zumindest in etwa flächenförmige Förderelementes 17 der Zuführeinrichtung 18 auf. Die Zuführeinrichtung 18 befördert das halmförmige Erntegut daraufhin zur Bearbeitungseinrichtung 4 zur Herstellung von Pellets. Befinden sich nun Steine im Erntegutstrom, so wird die Trennung von Erntegut und Steinen erfindungsgemäß durch vorteilhafte Wirkung des angetriebenen, eine schiefe Ebene bildenden und zumindest in etwa flächenförmigen Förderelementes 17 herbeigeführt, Dadurch, dass das mit Steinen versetzte Erntegut beim Überqueren des Spaltes 16 in der Förderstrecke 3 auf das angetriebene, eine schiefe Ebene bildende und zumindest in etwa flächenförmige Förderelementes 17 auftrifft, wird das halmförmige Erntegut auf dem angetriebenen, eine schiefe Ebene bildenden und zumindest in etwa flächenförmigen Förderelement 17 aufgrund der länglichen und flachen Struktur des Erntegutes schräg nach oben gefördert, während die Steine aufgrund der runden und damit rollfähigen Struktur und des großen Gewichts von der schiefen Ebene herunterrollend die Förderstrecke 3 verlassen. Eine zuverlässige Trennung von Erntegut und Steinen ist damit sichergestellt.

## Patentansprüche

1. Landwirtschaftliche Erntemaschine zur Bearbeitung von halmförmigen Erntegut mit einer Aufnahmeeinrichtung (2) zur Aufnahme des halmförmigen Erntegutes und zur Weiterförderung des halmförmigen Erntegutes in Richtung auf eine, in Bezug zu einer Fahrt- und Arbeitsrichtung (F) der Erntemaschine, der Aufnahmeeinrichtung (2) nachgeordneten Bearbeitungseinrichtung (4), wobei zwischen der Aufnahmeeinrichtung (2) und der Bearbeitungseinrichtung (4) eine Förderstrecke (3) für das halmförmige Erntegut ausgebildet ist, wobei die Förderstrecke (3) zumindest aus einem ortfesten Förderbodenelement (13) und einem angetriebenen, eine schiefe Ebene bildenden, zumindest in etwa flächenförmigen Förderelement (17) gebildet ist, wobei das ortsfeste Förderbodenelement (13) und das angetriebene, eine schiefe Ebene bildende, zumindest in etwa flächenförmige Förderelement (17) durch einen sich über die gesamte Breite der Förderstrecke (3) erstreckenden Spalt (16) voneinander getrennt sind, **dadurch gekennzeichnet, dass** der Spalt (16) dazu eingerichtet ist, dass durch ihn Steine oder dgl. Fremdkörper im Erntegut aus der Förderstrecke (3) ausgeschieden werden und dass das ortsfeste Förderbodenelement (13) dazu eingerichtet ist, den Erntegutstrom beim Überqueren des Spaltes (16) in der Förderstrecke (3) derart auszurichten, dass dieser auf das angetriebene, eine schiefe Ebene bildende, zumindest in etwa flächenförmige Förderelement (17) auftrifft, wobei das angetriebene, eine schiefe Ebene bildende und zumindest in etwa flächenförmiges Förderelement (17) ein Bereich einer Zuführeinrichtung (18) ist, der sich zwischen zwei Umlenkrollen (19,20) erstreckt und etwa flächenförmig in der Art einer schiefen Ebene in Richtung auf die nachgeordnete Bearbeitungseinrichtung (4) ausgerichtet ist, dessen Ausrichtung so gewählt ist, dass der Anstellwinkel in Bezug zur Vertikalen im Bereich zwischen 30° und 60° liegt.

2. Landwirtschaftliche Erntemaschine nach Anspruch 1, **dadurch gekennzeichnet, dass** das angetriebene, eine schiefe Ebene bildende, zumindest in etwa flächenförmige Förderelement (17) so gestaltet ist, dass das Erntegut beim Auftreffen einen Bewegungsimpuls erfährt, der in eine vom Erdboden ausgehende und in etwa in Richtung der Bearbeitungseinrichtung (4) schräg nach oben weisende Richtung gerichtet ist.

3. Landwirtschaftliche Erntemaschine nach Anspruch 1, **dadurch gekennzeichnet, dass** das angetriebene, eine schiefe Ebene bildende, zumindest in etwa flächenförmige Förderelement (17) eine Positionierung aufweist, bei der die in Fahrt- und Arbeitsrichtung (F) vorderste Kante (22) des Förderelementes (17) in vertikaler Blickrichtung noch unterhalb der hintersten Kante (23) des ortsfesten Förderbodenelementes (13) gelegen ist.

4. Landwirtschaftliche Erntemaschine nach Anspruch 1, **dadurch gekennzeichnet, dass** das angetriebene, eine schiefe Ebene bildende, zumindest in etwa flächenförmige Förderelement (17) Teil einer der Bearbeitungseinrichtung (4) das Erntegut aufgebende Zuführeinrichtung (18) ist.

5. Landwirtschaftliche Erntemaschine nach Anspruch 4, **dadurch gekennzeichnet, dass** die Zuführeinrichtung (18) eine aus einem umlaufend angetriebenen Förderband (21) gebildete Gurtfördereinrichtung ist.

6. Landwirtschaftliche Erntemaschine nach Anspruch 1, **dadurch gekennzeichnet, dass** das angetriebene, eine schiefe Ebene bildende, zumindest in etwa flächenförmige Förderelement aus einer Anzahl von aneinander gereihten walzenförmigen Förderern gebildet ist.

7. Landwirtschaftliche Erntemaschine nach zumindest einem der Ansprüche 1 bis 6, **dadurch gekennzeichnet, dass** der Aufnahmeeinrichtung (2) ein Förderrotor (11) nachgeordnet ist, wobei dem Förderrotor (11) zugehörige Abstreifer (12) die Durchgangsweite des Förderkanals (15) für Steine oder dgl. Fremdkörper auf ein Maß begrenzen, welches kleiner ist als die Durchgangsweite des Spaltes (16) in der Förderstrecke (3).

8. Landwirtschaftliche Erntemaschine nach zumindest einem der Ansprüche 1 bis 8, **dadurch gekennzeichnet, dass** die Bearbeitungseinrichtung (4) aus zumindest zwei einander zugeordneten Presstrommeln (19,20) zur Herstellung von Pellets besteht.

## Claims

1. Agricultural harvester for processing stalk-like harvested crops, comprising a pick-up device (2) for collecting the stalk-like harvested crops and for conveying the stalk-like harvested crops in the direction of a processing device (4) arranged downstream of the pick-up device (2) in relation to a travelling and working direction (F) of the harvester, a conveyor path (3) for the stalk-like harvested crops being formed between the pick-up device (2) and the processing device (4), the conveyor path (3) being formed at least from a stationary conveyor base element (13) and a driven conveyor element (17) that forms an inclined plane and is at least approximately planar, the stationary conveyor base element (13) and the driven conveyor element (17) that forms an inclined plane and is at least approximately planar being separated from one another by a gap (16) that extends over the entire width of the conveyor path (3), **characterised in that** the gap (16) is designed such that stones or similar foreign bodies in the harvested crops are removed from the conveyor path (3) through said gap and **in that** the stationary conveyor base element (13) is designed to orient the harvested crops flow when crossing the gap (16) in the conveyor path (3) in such a way that it acts on the driven conveyor element (17) that forms an inclined plane and is at least approximately planar, the driven conveyor element (17) that forms an inclined plane and is at least approximately planar being a region of a feed device (18) which extends between two deflection rollers (19, 20) and is oriented so as to be approximately planar in the manner of an inclined plane in the direction of the processing device (4) arranged downstream, the orientation of which is selected such that the setting angle with respect to the vertical lines is in the range between 30° and 60°.

2. Agricultural harvester according to claim 1, **characterised in that** the driven conveyor element (17) that forms an inclined plane and is at least approximately planar is designed such that the harvested crops experience momentum upon impact, which momentum is oriented in a direction that starts from the ground and points obliquely upwards approximately in the direction of the processing device (4).

3. Agricultural harvester according to claim 1, **characterised In that** the driven conveyor element (17) that forms an inclined plane and is at least approximately planar has a positioning in which the edge (22) of the conveyor element (17) that is foremost in the travelling and working direction (F) is located further below the rearmost edge (23) of the stationary conveyor base element (13) in the vertical viewing direction.

4. Agricultural harvester according to claim 1, **characterised in that** the driven conveyor element (17) that forms an inclined plane and is at least approximately planar is part of a feed device (18) that outputs the harvested crops to the processing device (4).

5. Agricultural harvester according to claim 4, **characterised in that** the feed device (18) is a belt conveyor device formed from a circumferentially driven conveyor belt (21).

6. Agricultural harvester according to claim 1, **characterised in that** the driven conveyor element that forms an inclined plane and is at least approximately planar is formed from a plurality of roller-shaped conveyors one next to the other in rows.

7. Agricultural harvester according to at least one of claims 1 to 6, **characterised in that** a conveyor rotor (11) is arranged downstream of the pick-up device (2), scrapers (12) associated with the conveyor rotor (11) delimiting the passage width of the conveyor channel (15) for stones or similar foreign bodies to a dimension which is smaller than the passage width of the gap (16) in the conveyor path (3).

8. Agricultural harvester according to at least one of claims 1 to 8, **characterised in that** the processing device (4) consists of at least two associated pressing drums (19, 20) assigned to one another for the production of pellets.

## Revendications

1. Moissonneuse agricole destinée à traiter des produits de récolte sous forme de tiges comprenant un dispositif de réception (2) permettant de collecter les produits de récolte sous forme de tiges et de les convoyer en direction d'un dispositif de traitement (4) situé en aval du dispositif de réception (2) par rapport à la direction de déplacement et de travail (F) de la moissonneuse, entre le dispositif de réception (2) et le dispositif de traitement (4) étant formé un trajet de convoyage (3) des produits de récolte sous forme de tiges, le trajet de convoyage étant formé au moins d'un élément convoyeur de base fixe (13) et d'un élément de convoyeur entraîné (17) de forme au moins essentiellement plane, formant un plan incliné,
l'élément convoyeur de base fixe (13) et l'élément convoyeur entraîné (17) de forme au moins essentiellement plane formant un plan incliné étant séparés l'un de l'autre par un intervalle (16) s'étendant sur la totalité de la largeur du trajet de convoyage (3),
**caractérisée en ce que**
l'intervalle (16) est réalisé de façon à permettre d'évacuer des pierres ou corps étrangers similaires situés dans les produits de récolte du trajet de convoyage (3), et l'élément convoyeur de base fixe (13) est réalisé pour orienter le flux de produits de récolte dans le trajet de convoyage (3) lors du franchissement de l'intervalle (5) de sorte que ces produits parviennent sur l'élément convoyeur entrainé (17) de forme au moins essentiellement plane formant un plan incliné, l'élément convoyeur entraîné (17) de forme au moins essentiellement plane formant un plan incliné étant une zone d'un dispositif d'alimentation (18) qui s'étend entre deux galets de renvoi (19, 20) et est orientée selon une forme essentiellement plane définissant un plan incliné en direction du dispositif de traitement (4) situé en aval et dont l'orientation est choisie de sorte que l'angle d'attaque par rapport à la verticale soit situé dans la plage comprise entre 30° et 60°.

2. Moissonneuse agricole conforme à la revendication 1,
**caractérisée en ce que**
l'élément convoyeur entraîné (17) de forme au moins essentiellement plane formant un plan incliné est conformé de sorte que lors de leur mise en contact les produits de récolte subissent une impulsion de déplacement qui est orientée dans une direction partant du sol et s'étendant obliquement vers le haut essentiellement en direction du dispositif de traitement (4).

3. Moissonneuse agricole conforme à la revendication 1,
**caractérisée en ce que**
l'élément convoyeur entraîné (17) de forme au moins essentiellement plane formant un plan incliné a un positionnement dans lequel l'arête (22) la plus en avant dans la direction de déplacement et de travail (F) de cet élément convoyeur (17) est encore située par rapport à la verticale au-dessous de l'arête la plus en arrière (23) de l'élément convoyeur de base fixe (13).

4. Moissonneuse agricole conforme à la revendication 1,
**caractérisée en ce que**
l'élément convoyeur entraîné (17) de forme au moins essentiellement plane formant un plan incliné est une partie d'un dispositif d'alimentation (18) transférant les produits de récolte au dispositif de traitement (4).

5. Moissonneuse agricole conforme à la revendication 4,
**caractérisée en ce que**
le dispositif d'alimentation (18) est un dispositif convoyeur à courroie formé par une bande convoyeuse rotative entrainée (21).

6. Moissonneuse agricole conforme à la revendication 1,
**caractérisée en ce que**
l'élément convoyeur entrainé de forme au moins essentiellement plane formant un plan incliné est formé par une série de convoyeurs cylindriques alignés.

7. Moissonneuse agricole conforme à au moins l'une des revendications 1 à 6,
**caractérisée en ce qu'**
un rotor de convoyage (11) est monté en aval du dispositif de réception (2), et des racloirs (12) faisant partie du rotor de convoyage (11) limitent la largeur de passage du canal de convoyage (15) pour des pierres ou autres corps étrangers à une valeur qui est inférieure à la largeur de passage de l'intervalle (16) dans la trajet de convoyage (3).

8. Moissonneuse agricole conforme à au moins l'une des revendications 1 à 8,
**caractérisée en ce que**
le dispositif de traitement (14) est constitué par au moins deux tambours de pressage associés l'un à l'autre (19, 20) de façon à permettre l'obtention de pastilles.
